# EUROPÄISCHE PATENTSCHRIFT

(11) **EP 4 103 963 B1**
(45) Veröffentlichungstag und Bekanntmachung des Hinweises auf die Patenterteilung: **23.07.2025**
(21) Anmeldenummer: 21703000.6
(22) Anmeldetag: 01.02.2021
(51) Int. Cl.: G01S 7/48, G01S 7/4863, G01S 7/487, G01S 17/95

(54) **EINRICHTUNG ZUR ERZEUGUNG VON RÜCKSTREUUNGS-HISTOGRAMMDATEN FÜR DIE BESTIMMUNG EINER DIFFUSEN RÜCKSTREUUNG BEI EINER OPTISCHEN LAUFZEITMESSUNG UND VERFAHREN**
DEVICE FOR GENERATING BACKSCATTERING HISTOGRAM DATA FOR DETERMINING A DIFFUSE BACKSCATTERING IN AN OPTICAL DELAY MEASUREMENT AND METHOD
DISPOSITIF DE PRODUCTION DE DONNÉES D'HISTOGRAMME DE RETRODIFFUSION POUR LA DÉTERMINATION D'UNE RÉTRODIFFUSION DIFFUSE DANS UNE MESURE DE RETARD OPTIQUE, ET PROCÉDÉ

(30) Priorität: 11.02.2020 DE 102020201636
(43) Veröffentlichungstag der Anmeldung: 21.12.2022
(73) Patentinhaber: MicroVision, Inc., Redmond, WA 98052 (US)
(72) Erfinder: BEUSCHEL, Ralf, 88046 Friedrichshafen (DE); DIEBEL, Falko, 22143 Hamburg (DE)
(74) Vertreter: RGTH
(86) Internationale Anmeldenummer: PCT/EP2021/052286
(87) Internationale Veröffentlichungsnummer: WO 2021/160455

(56) Entgegenhaltungen:
- WO-A1-2019/102751
- US-A1- 2018 329 061
- US-A1- 2019 265 333
- US-A1- 2019 361 098
- US-A1- 2021 025 980

## Beschreibung

Die vorliegende Erfindung betrifft allgemein eine Einrichtung zur Erzeugung von Rückstreuungs-Histogrammdaten für die Bestimmung einer diffusen Rückstreuung bei einer optischen Laufzeitmessung und ein Verfahren zur Erzeugung von Rückstreuungs-Histogrammdaten für die Bestimmung einer diffusen Rückstreuung bei einer optischen Laufzeitmessung.

Allgemein sind verschiedene Verfahren zur optischen Laufzeitmessung bekannt, die auf dem sogenannten Time-of-Flight Prinzip beruhen können, bei dem die Laufzeit eines ausgesendeten und von einem Objekt reflektierten Lichtsignals gemessen wird, um die Distanz zu dem Objekt auf Grundlage der Laufzeit zu bestimmen.

Es ist bekannt, im Kraftfahrzeugumfeld Sensoren einzusetzen, die auf dem sogenannten LIDAR-Prinzip beruhen (Light Detection and Ranging), bei dem zum Abtasten der Umgebung periodisch Pulse ausgesendet und die reflektierten Pulse detektiert werden. Ein entsprechendes Verfahren und eine Vorrichtung sind beispielsweise aus WO 2017/081294 bekannt.

US 2019/0361098 A1 offenbart ein Verfahren zur Verarbeitung von Lidar Messpulsen, während US 2019/0265333 A1 eine Vorrichtung zur Messung von Distanzen betrifft. Auch WO 2019/102751 betrifft eine Messeinheit zur Distanzmessung, wohingegen US 2018/0329061 A1 optisches System zur Bestimmung von Distanzen beschreibt.

Allgemein können sich bei LIDAR-Anwendungen die Art der detektierten Lichtsignale unterscheiden, z. B. je nachdem ob das ausgesendete Lichtsignal an einem festen Objekt reflektiert wird (Objekt-Rückstreuung) oder durch in der Luft befindliche Partikel zurückgestreut wird (diffuse Rückstreuung), wie beispielsweise in Nebel oder in Abgasen. Aus den aufgezeichneten Rückstreuungsdaten lassen sich Rückschlüsse auf die Umgebungsbedingungen ziehen.

Auch wenn aus dem Stand der Technik Lösungen für die Aufzeichnung von Rückstreuungsdaten bei optischen Laufzeitmessungen bekannt sind, ist es eine Aufgabe der vorliegenden Erfindung, eine Einrichtung und ein Verfahren zur Erzeugung von Rückstreuungs-Histogrammdaten für die Bestimmung einer Rückstreuung bei einer optischen Laufzeitmessung bereitzustellen.

Diese Aufgabe lösen die Einrichtung und das Verfahren nach den unabhängigen Ansprüchen.

Gemäß einem ersten Aspekt stellt die vorliegende Erfindung eine Einrichtung zur Erzeugung von Rückstreuungs-Histogrammdaten für die Bestimmung einer diffusen Rückstreuung bei einer optischen Laufzeitmessung bereit, umfassend:
wenigstens eine Histogramm-Akkumulationseinheit, die mehrere Signaleingänge aufweist, um zeitkorrelierte Histogrammdaten zu empfangen, wobei die Histogramm-Akkumulationseinheit dazu eingerichtet ist, basierend auf den an den Signaleingängen empfangenen zeitkorrelierten Histogrammdaten, Rückstreuungs-Histogrammdaten zu erzeugen. Für die Bestimmung der diffusen Rückstreuung werden die Zeitintervalle, die über einem bestimmten Zeitschwellwert (dies entspricht einem Distanzschwellenwert, z.B. von 20 m) liegen, für die Erzeugung der Rückstreuungs- Histogrammdaten nicht berücksichtigt.

Gemäß einem zweiten Aspekt stellt die vorliegende Erfindung ein Verfahren zur Erzeugung von Rückstreuungs-Histogrammdaten für die Bestimmung einer diffusen Rückstreuung bei einer optischen Laufzeitmessung bereit, umfassend:
Empfangen mehrerer zeitkorrelierter Histogrammdaten; und Erzeugen von Rückstreuungs-Histogrammdaten basierend auf den empfangenen zeitkorrelierten Histogrammdaten. Für die Bestimmung der diffusen Rückstreuung werden die Zeitintervalle, die über einem bestimmten Zeitschwellwert (dies entspricht einem Distanzschwellenwert, z.B. von 20 m) liegen, für die Erzeugung der Rückstreuungs- Histogrammdaten nicht berücksichtigt.

Weitere vorteilhafte Ausgestaltungen der Erfindung ergeben sich aus den Unteransprüchen, den Zeichnungen und der folgenden Beschreibung bevorzugter Ausführungsbeispiele der vorliegenden Erfindung.

Wie erwähnt, betreffen manche Ausführungsbeispiele eine Einrichtung gemäß Anspruch 1.

Wie eingangs ausgeführt, lassen sich aus Rückstreuungsdaten bei LIDAR- Messungen Rückschlüsse auf Umgebungsbedingungen ziehen. Durch eine genauere Kenntnis der Umgebungsbedingungen (z.B. Nebel, etc.) kann, z.B. bei autonom fahrenden Kraftfahrzeugen, die Fahrweise entsprechend den Umgebungsbedingungen angepasst werden und so die Sicherheit erhöht werden. Des Weiteren erlaubt eine genaue Kenntnis der diffusen Rückstreuung bei LIDAR- Messungen bei manchen Ausführungsbeispielen auch eine (genauere) Detektion von festen Objekten. Dadurch lassen sich z.B. Verkehrssituationen genauer feststellen, was ebenfalls die Sicherheit und Zuverlässigkeit von autonomen Fahrzeugen erhöht.

Daher wird die Einrichtung in manchen Ausführungsbeispielen in einem LIDAR- System oder dergleichen verwendet und bspw. im Kraftfahrzeugumfeld eingesetzt, ohne dass die Erfindung auf diese Fälle beschränkt ist.

LIDAR-Daten enthalten bei manchen Ausführungsbeispielen typischerweise Signalbeiträge aus der Rückstreuung, der Lichtreflexion an Objekten, dem Umgebungslicht, Störlichtsignale durch weitere Lichtquellen in der Umgebung und dergleichen. Diese Daten können in einem Histogramm dargestellt werden, was grundsätzlich bekannt ist.

Entsprechend bedeutet die Erzeugung von Rückstreuungs-Histogrammdaten, dass die erzeugten Rückstreuungs-Histogrammdaten erfindungsgemäß mindestens den Signalbeitrag der diffusen Rückstreuung beinhalten bzw. so gebildet sind, dass sie grundsätzlich den Signalbeitrag der diffusen Rückstreuung enthalten können, und daher grundsätzlich für die Bestimmung der diffusen Rückstreuung bei einer optischen Distanzmessung geeignet sind.

Erfindungsgemäß basiert die optische Laufzeitmessung auf dem sogenannten TCSPC (time correlated single photon counting) Messprinzip, insbesondere bei Ausführungsbeispielen, welche auf LIDAR basieren. Erfindungsgemäß werden periodisch Lichtpulse ausgesandt, welche typischerweise einige Nanosekunden lang sind und einen Startzeitpunkt einer Messung markieren. Während der Zeit bis zum nächsten Lichtpuls (Messzeit) wird das von Objekten reflektierte Licht oder zurückgestreute Licht durch ein lichtdetektierendes Empfangselement (z.B. eine single photon avelanche diode (SPAD)) detektiert. Dabei wird erfindungsgemäß die Messzeit in eine Vielzahl von kurzen Zeitintervallen (bspw. 500 ps) eingeteilt. Jedem Zeitintervall kann dann ein Zeitpunkt zugeordnet werden, der einem zeitlichen Abstand zum Startzeitpunkt entspricht (z.B. kann bei Zeitintervallen von 500 ps einem ersten Zeitintervall ein Zeitpunkt von 250 ps zugeordnet werden und einem zweiten Zeitintervall ein Zeitpunkt von 750 ps zugeordnet werden usw.).

Abhängig von der Distanz zum Objekt oder zum Punkt der Rückstreuung erreicht das Licht das lichtdetektierende Empfangselement zu unterschiedlichen Zeitpunkten.

Dabei erzeugt es im lichtdetektierenden Empfangselement ein elektrisches Signal. Mithilfe eines Zeit-Digital-Wandlers (auch "TDC", time-to-digital converter, genannt), die grundsätzlich bekannt sind, lässt sich erfindungsgemäß dann das elektrische Signal einem der Zeitintervalle zuordnen. Durch das Zählen der elektrischen Signale ("Events"), die einem Zeitintervall zugeordnet werden, entstehen erfindungsgemäß sogenannte Histogramme bzw. zeitkorrelierte Histogramme (auch TCSPC-Histogramme genannt), wobei diese Histogramme bspw. auch nur als reine Daten vorliegen können und bspw. als Wertepaare aus Zeitintervall und zugehöriger Anzahl von Einträgen (Ereignissen oder Events) abgespeichert sind. Die Zeitintervalle zusammen mit der jedem Zeitintervall ("Bin") zugeordneten Anzahl an Events bilden dementsprechend Histogrammdaten, die grundsätzlich durch digitale Signale (oder auch analoge Signale) repräsentiert werden können. Diese enthalten daher typischerweise Signalbeiträge aus der diffusen Rückstreuung, der Lichtreflexion an Objekten, dem Umgebungslicht, Störlichtsignale durch weitere Lichtquellen in der Umgebung und dergleichen.

Die Einrichtung enthält wenigstens eine Histogramm-Akkumulationseinheit, die mehrere Signaleingänge aufweist. Die maximale Anzahl an Histogramm- Akkumulationseinheiten ist bei manchen Ausführungsbeispielen durch die Anzahl an lichtdetektierenden Empfangselementen in einem System zur optischen Laufzeitmessung (z.B. LIDAR-System) gegeben. Die Histogramm- Akkumulationseinheit kann dabei grundsätzlich ein elektronischer Schaltkreis sein bzw. aufweisen, der digitale Signale bzw. Daten, wie bspw. die zeitkorrelierten Histogrammdaten, über die Signaleingänge empfängt und die hierin beschriebene Erzeugung von Rückstreuungs-Histogrammdaten ausführt. Der elektronische Schaltkreis kann elektronische Komponenten, digitale Speicherelemente und dergleichen enthalten, um die hierin beschriebenen Funktionen auszuführen. Der elektronische Schaltkreis kann durch ein FPGA (Field Programmable Gate Array), DSP (Digitaler Signalprozessor) oder dergleichen realisiert sein. In anderen Ausführungsbeispielen ist die Histogramm-Akkumulationseinheit durch einen Speicher und einen Mikroprozessor realisiert. In weiteren Ausführungsbeispielen ist die Histogramm-Akkumulationseinheit durch eine Software realisiert, wobei in solchen Ausführungsbeispielen die Signaleingänge den Parametern/Attributen einer Software-Funktion/-Methode entsprechen. Die Erzeugung der Rückstreuungs- Histogrammdaten entspricht dann einer Ausführung einer Abfolge von Befehlen zur Ausführung bestimmter Rechenoperationen auf einem Computer, sodass nach Abarbeitung aller Befehle Rückstreuungs-Histogrammdaten vorliegen. Bei manchen Ausführungsbeispielen ist die Histogramm-Akkumulationseinheit auch durch eine Mischung von hard- und softwarebasierten Komponenten realisiert, auf welche die hierin beschriebenen Funktionalitäten entsprechend verteilt sind.

Die Histogramm-Akkumulationseinheit empfängt an dem bzw. jedem Signaleingang zeitkorrelierte Histogrammdaten. Dabei müssen nicht immer an jedem Signaleingang die Histogrammdaten empfangen werden und bei manchen Ausführungsbeispielen gibt es auch noch weitere Signaleingänge, an denen bspw. keine oder nur nach entsprechender Konfiguration Histogrammdaten empfangen werden.

Zeitkorrelierte Histogrammdaten sind solche Daten, die basierend auf den elektrischen Signalen der lichtdetektierenden Empfangselemente innerhalb der (zugehörigen) Messzeit erzeugt werden. Wie oben erwähnt, enthalten diese daher typischerweise Signalbeiträge aus der diffusen Rückstreuung, der Lichtreflexion an Objekten, dem Umgebungslicht, Störlichtsignale durch weitere Lichtquellen in der Umgebung und dergleichen.

In manchen Ausführungsbeispielen sind die empfangenen zeitkorrelierten Histogrammdaten an jedem Signaleingang durch zeitkorrelierte Histogrammdaten von einem lichtdetektierenden Empfangselement gegeben. In anderen Ausführungsbeispielen sind die empfangenen zeitkorrelierten Histogrammdaten an jedem Signaleingang durch die Summe von zeitkorrelierten Histogrammdaten mehrerer lichtdetektierenden Empfangselemente gegeben. In weiteren Ausführungsbeispielen sind die empfangenen zeitkorrelierten Histogrammdaten an jedem Signaleingang durch mehrere zeitkorrelierte Histogrammdaten von mehreren lichtdetektierenden Empfangselementen gegeben.

Basierend auf den an den Signaleingängen empfangenen zeitkorrelierten Histogrammdaten werden Rückstreuungs-Histogrammdaten erzeugt.

Typischerweise ist die Menge des Lichts, welches aufgrund von diffuser Rückstreuung detektiert wird, im Vergleich zum Umgebungslicht, z.B. bei Tageslicht, und der an Objekten reflektierten Lichtmenge gering, sodass eine Bestimmung der diffusen Rückstreuung insbesondere bei zeitkorrelierten Histogrammdaten schwierig und ungenau sein kann. Daher wird die Einrichtung in manchen Ausführungsbeispielen für die Erzeugung von Rückstreuungs-Histogrammdaten für die Bestimmung der diffusen Rückstreuung bei einer optischen Laufzeitmessung verwendet.

Die Rückstreuungs-Histogrammdaten entsprechen dabei in manchen Ausführungsbeispielen einer Akkumulation von zeitkorrelierten Histogrammdaten mehrerer lichtdetektierender Empfangselemente. Die Akkumulation von zeitkorrelierten Histogrammdaten kann vorteilhaft für die Bestimmung der diffusen Rückstreuung sein, da das Signal-Rausch-Verhältnis (auch "SNR", signal-to-noise ratio, genannt) des diffusen Rückstreuungsbeitrags im Vergleich zu anderen Signalbeiträgen erhöht wird. Dadurch lässt sich bei manchen Ausführungsbeispielen die diffuse Rückstreuung besser bestimmen.

Dies folgt grundsätzlich daraus, dass die diffuse Rückstreuung bei einer optischen Laufzeitmessung typischerweise bei kurzen Distanzen (bspw. 5 m) höher ist als bei langen Distanzen (bspw. 200 m) und kontinuierlich abfallen kann.

Im Gegensatz dazu ist während der Messzeit das Umgebungslicht in der Regel konstant und gibt somit typischerweise einen konstanten Beitrag in allen Zeitintervallen. Ebenso sind die Signalbeiträge von Reflexionen an Objekten häufig scharfe Peaks, das heißt, dass das reflektierte Licht nur in einem oder wenigen Zeitintervallen detektiert wird, weil der Lichtpuls mit abgeschwächter Amplitude aber nahezu gleicher Pulsdauer empfangen werden kann. Bei typischen Pulsdauern von z. B. 10 ns kann z. B. eine 250 ps Zeitauflösung für eine genaue Ortsbestimmung benötig werden.

Bei der diffusen Rückstreuung an z .B. Nebel bzw. Partikel in der Luft kann eine kontinuierliche Rückstreuung während der Lichtausbreitung mit niedriger Intensität auftreten. Der Lichtpuls kann dabei sehr stark aufgeweitet bzw. zeitlich verschmiert werden. Bei z. B. einem 10 ns Lichtpuls mit geometrischer Ausdehnung von 1.5 m kann diffuse Rückstreuung über einen 1.5 m Tiefenbereich zu jeder Zeit erzeugt werden. Daher ist bei manchen Ausführungsbeispielen eine deutlich reduzierte Zeitauflösung ausreichend.

Folglich kann für die Bestimmung der diffusen Rückstreuung in manchen Ausführungsbeispielen die Zeitauflösung (Distanzauflösung, z.B. 16 cm für die Bestimmung der Rückstreuung im Vergleich zu 4 cm für eine Objekterkennung) kleiner gewählt werden. Dies kann in solchen Ausführungsbeispielen durch die Akkumulation der zeitkorrelierten Histogrammdaten von mehreren Zeitintervallen in ein Zeitintervall berücksichtigt werden.

Des Weiteren sind die Beiträge der diffusen Rückstreuung typischerweise über das gesamte Sichtfeld des LIDAR-Systems ähnlich, da z.B. Nebel räumlich nicht scharf begrenzt ist. Hingegen sind Objekte häufig nur in einem engen Bereich des Sichtfelds vorhanden, wobei das Sichtfeld einen Raumbereich beschreibt, der detektiert wird. Daher kann für die Bestimmung der diffusen Rückstreuung in manchen Ausführungsbeispielen die räumliche Auflösung kleiner gewählt werden. Dies kann in solchen Ausführungsbeispielen durch die Akkumulation der zeitkorrelierten Histogrammdaten von mehreren lichtdetektierenden Empfangselementen berücksichtigt werden.

Dies ist vorteilhaft, da dadurch die Datenmenge für die Bestimmung der Rückstreuung reduziert wird und somit benötigte Rechen- und Speicherkapazitäten reduziert werden. Dies begünstigt auch einen geringeren Stromverbrauch.

Daher erzeugt erfindungsgemäß die Histogramm- Akkumulationseinheit die Rückstreuungs-Histogrammdaten durch Addition der empfangenen zeitkorrelierten Histogrammdaten.

Dabei kann die Anzahl an Events, die in einem Zeitintervall detektiert wurden, aus allen empfangenen zeitkorrelierten Histogrammdaten addiert werden, sodass die Rückstreuungs-Histogrammdaten erzeugt werden, die in jedem Zeitintervall gerade die Summe aller Events in diesem Zeitintervall enthalten. Vorzugsweise werden die zeitkorrelierten Histogrammdaten als Integerzahlen akkumuliert bzw. addiert, um eine in manchen Ausführungsbeispielen schwache diffuse Rückstreuung messbar zu machen. Dies ist vorteilhaft, da das SNR des diffusen Rückstreuungsbeitrags im Vergleich zu anderen Beiträgen erhöht werden kann, wie oben beschrieben.

In manchen Ausführungsbeispielen berechnet die Histogramm-Akkumulationseinheit aus den empfangenen zeitkorrelierten Histogrammdaten ein arithmetisches Mittel, um die Rückstreuungs-Histogrammdaten zu erzeugen.

Dabei werden, wie oben beschrieben, die empfangenen zeitkorrelierten Histogrammdaten addiert und durch die Anzahl der Signaleingänge dividiert. Dies kann bei manchen Ausführungsbeispielen vorteilhaft sein, die eine Festkommazahl- oder Gleitkommazahl-Realisierung (im Unterschied zu Ausführungsbeispielen die Integerzahlen akkumulieren) aufweisen.

In manchen Ausführungsbeispielen akkumuliert die Histogramm- Akkumulationseinheit die empfangenen zeitkorrelierten Histogrammdaten von mehreren Zeitintervallen in einem Zeitintervall, um die Rückstreuungs- Histogrammdaten zu erzeugen.

Wie oben erwähnt, kann die Distanzauflösung (Zeitauflösung) für die Bestimmung der diffusen Rückstreuung reduziert werden, um Rechen- und Speicherkapazitäten einzusparen, da der Signalbeitrag der diffusen Rückstreuung kontinuierlich abfallen kann und typischerweise keine scharfen Peaks aufweist.

Daher können die Anzahl an Events von mehreren Zeitintervallen in einem Zeitintervall akkumuliert werden, vorzugsweise addiert werden. In solchen Ausführungsbeispielen sind die akkumulierten Zeitintervalle vorzugsweise zeitlich aufeinanderfolgende Zeitintervalle (Zeitpunkte) und das Zeitintervall in dem akkumuliert wird ist vorzugsweise ein Zeitintervall, welches zeitlich zwischen dem minimalen und maximalen Zeitpunkt der akkumulierten Zeitintervalle liegt.

Erfindungsgemäß ist die Histogramm-Akkumulationseinheit weiter dazu eingerichtet, empfangene zeitkorrelierte Histogrammdaten von Zeitintervallen, die über einem bestimmten Zeitschwellenwert liegen, für die Erzeugung der Rückstreuungs-Histogrammdaten nicht zu berücksichtigen.

Die diffuse Rückstreuung bei einer optischen Laufzeitmessung ist typischerweise bei langen Distanzen nicht mehr detektierbar, da die Lichtmenge zu gering ist. Daher können Zeitintervalle für die Bestimmung der diffusen Rückstreuung, die über einem bestimmten Zeitschwellenwert liegen, vernachlässigt werden, um Speicher- und Rechenkapazitäten einzusparen.

In Ausführungsbeispielen kann dies bei der Erzeugung der Rückstreuungs-Histogrammdaten aus empfangenen zeitkorrelierten Histogrammdaten dadurch erreicht werden, dass bspw. bei der oben beschriebenen Addition der empfangenen zeitkorrelierten Histogrammdaten nur solche Zeitintervalle berücksichtigt werden, die unter dem Zeitschwellenwert liegen.

In manchen Ausführungsbeispielen ist die Histogramm-Akkumulationseinheit weiter dazu eingerichtet, die empfangenen zeitkorrelierten Histogrammdaten für die Erzeugung der Rückstreuungs-Histogrammdaten zu gewichten.

Eine Gewichtung der empfangenen zeitkorrelierten Histogrammdaten kann dabei bspw. eine Multiplikation einzelner zeitkorrelierter Histogrammdaten mit einem Faktor größer oder kleiner eins sein (z.B. für jeden Signaleingang unterschiedlich). In sol-chen Ausführungsbeispielen erhalten zeitkorrelierte Histogrammdaten, die mit einem Faktor größer eins multipliziert werden, ein höheres Gewicht für die Erzeugung der Rückstreuungs-Histogrammdaten und umgekehrt ergibt ein Faktor kleiner eins ein kleineres Gewicht für die Erzeugung der Rückstreuungs- Histogrammdaten (ohne die vorliegende Erfindung auf dieses Beispiel einer Gewichtung zu beschränken).

Dies kann vorteilhaft sein, falls bspw. in manchen zeitkorrelierten Histogrammdaten größere Beiträge durch Objekte oder Umgebungslicht vorhanden sind, sodass die Bestimmung der diffusen Rückstreuung anhand dieser zeitkorrelierten Histogrammdaten schwieriger ist. Entsprechend können solche zeitkorrelierten Histogrammdaten mit einem Faktor kleiner eins multipliziert werden.

In manchen Ausführungsbeispielen ist die Histogramm-Akkumulationseinheit weiter dazu eingerichtet, die Rückstreuungs-Histogrammdaten für die Bestimmung der diffusen Rückstreuung auszugeben. Die Rückstreuungs-Histogrammdaten können dann bspw. an einen Prozessor, FPGA oder dergleichen zur Bestimmung der Rückstreuung ausgegeben werden.

Erfindungsgemäß enthält die Einrichtung eine Empfangsmatrix mit mehreren lichtdetektierenden Empfangselementen, wobei jedes der lichtdetektierenden Empfangselemente dazu eingerichtet ist, Licht zu detektieren und in Reaktion darauf ein elektrisches Signal zu erzeugen.

Bei der Empfangsmatrix handelt es sich grundsätzlich um einen dreidimensionalen Körper, insbesondere um einen plattenförmigen Körper, wobei auf einer Oberfläche oder auf Teilen der Oberfläche mehrere lichtdetektierende Empfangselemente in einer Ebene angeordnet sind, wie es grundsätzlich bekannt ist.

Die Empfangsmatrix kann vorzugsweise auf einem Halbleiterchip (z. B. einen ASIC - "Application Specific Integrated Circuit") integriert sein, wobei der Halbleiterchip mehrere lichtdetektierende Empfangselemente wie SPADs und mehrere TDCs aufweisen kann. In anderen Ausführungsbeispielen kann die Empfangsmatrix eine Leiterplatine sein auf der mehrere lichtdetektierende Empfangselemente montiert sind, wobei ein lichtdetektierendes Empfangselement bspw. eine SPAD oder dergleichen ist.

Grundsätzlich kann das lichtdetektierende Empfangselement sehr geringe Lichtmengen (z.B. einzelne Photonen) mit hoher Zeitauflösung detektieren und in Reaktion darauf ein elektrisches Signal erzeugen.

In manchen Ausführungsbeispielen ist jedes der lichtdetektierenden Empfangselemente aktivierbar und deaktivierbar. Sind bspw. SPADs als lichtdetektierenden Empfangselemente vorgesehen, so kann durch eine Änderung einer an das lichtdetektierende Empfangselement angelegten elektrischen Spannung die Lichtdetektion unterbrochen werden. In solchen Ausführungsbeispielen erzeugt das lichtdetektierende Empfangselement bei Lichteinfall kein elektrisches Signal. Dies ist vorteilhaft, da bestimmte Bereiche des Sichtfelds für die Bestimmung der Rückstreuung ausgeblendet werden können.

In manchen Ausführungsbeispielen sind die lichtdetektierenden Empfangselemente in der Empfangsmatrix in Spalten und in Zeilen angeordnet (wie es grundsätzlich bekannt ist), wobei bei manchen Ausführungsbeispielen ohne Beschränkung der Allgemeinheit in jeder Zeile gleich viele lichtdetektierende Empfangselemente vorgesehen sind.

Dabei bedeutet eine Anordnung der lichtdetektierenden Empfangselemente in Spalten und in Zeilen grundsätzlich eine Anordnung in einem gitterartigen Raster, wobei der Spalten- und Zeilenabstand vorzugsweise konstant ist. Hierbei ist konstant nicht als exakt zu verstehen, sondern beinhaltet auch eine fertigungsbedingte Toleranz des Spalten- und Zeilenabstands in der Anordnung der lichtdetektierenden Empfangselemente. Die Anzahl der Zeilen und Spalten ist dabei grundsätzlich nicht limitiert und richtet sich typischerweise in den Ausführungsbeispielen nach einer konkreten Anforderung, bspw. an die Auflösung, die zu verarbeitende Datenmenge, die Genauigkeit, etc.

Die Anordnung der lichtdetektierenden Empfangselemente in der Empfangsmatrix in Spalten und in Zeilen ist vorteilhaft, da dadurch weniger Platz benötigt wird und somit kostengünstiger ist. Außerdem lässt sich die Empfangsmatrix in solchen Ausführungsbeispielen günstiger herstellen.

Weiterhin ist es vorteilhaft gleich viele lichtdetektierende Empfangselemente in einer Zeile anzuordnen, da in solchen Ausführungsbeispielen jeder Bereich des Sichtfelds die gleiche räumliche Auflösung hat und auch günstiger hergestellt werden kann.

In manchen Ausführungsbeispielen umfasst die Einrichtung mehrere Auswerteeinheiten, wobei jeweils eine Auswerteeinheit mit den lichtdetektierenden Empfangselementen in einer Spalte oder jeweils eine Auswerteeinheit mit den lichtdetektierenden Empfangselementen in einer Zeile verbunden ist.

Eine Auswerteeinheit kann dabei ein elektronischer Schaltkreis sein bzw. diesen enthalten, wobei der elektronische Schaltkreis elektronische Komponenten, digitale Speicherelemente und dergleichen enthalten kann, um die hierin beschriebenen Funktionen auszuführen. Der elektronische Schaltkreis kann auch durch ein FPGA (Field Programmable Gate Array), DSP (Digitaler Signalprozessor) oder dergleichen realisiert sein.

Die Auswerteeinheit ist mit den lichtdetektierenden Empfangselementen derart verbunden, dass die elektrischen Signale der lichtdetektierenden Empfangselemente an die Auswerteeinheit übertragen werden. Bei manchen Ausführungsbeispielen ist die Auswerteeinheit mit den lichtdetektierenden Empfangselementen über einen Multiplexer verbunden. Die Auswerteeinheit kann eine Zeile oder Spalte als Ganzes auslesen oder sie kann nur die aktivierten lichtdetektierenden Empfangselemente auslesen.

Die Auswerteeinheit kann einen Zeit-Digital-Wandler aufweisen, um die elektrischen Signale der lichtdetektierenden Empfangselemente zeitlich einzuordnen und zeitkorrelierte Histogrammdaten zu jedem der lichtdetektierenden Empfangselemente einer Zeile oder Spalte zu erzeugen. In anderen Ausführungsbeispielen werden die zeitkorrelierten Histogrammdaten einer Spalte oder Zeile in der Auswerteeinheit akkumuliert. Die Auswerteeinheit kann die zeitkorrelierten Histogrammdaten ausgeben.

Daher ist in manchen Ausführungsbeispielen jede der Auswerteeinheiten dazu eingerichtet, die zeitkorrelierten Histogrammdaten basierend auf den elektrischen Signalen der lichtdetektierenden Empfangselemente zu erzeugen.

Folglich werden in machen Ausführungsbeispielen für die Erzeugung der zeitkorrelierten Histogrammdaten nur die lichtdetektierenden Empfangselemente berücksichtigt, die aktiviert sind.

Entsprechend ist in manchen Ausführungsbeispielen jeder Signaleingang einer Histogramm-Akkumulationseinheit mit einer der Auswerteeinheiten verbunden, sodass die zeitkorrelierten Histogrammdaten von der Auswerteeinheit an die entsprechende Histogramm-Akkumulationseinheit übertragen werden.

Die oben bzw. hierin erläuterten Verfahrensschritte können auch Gegenstand eines Verfahrens zur Erzeugung von Rückstreuungs-Histogrammdaten für die Bestimmung einer diffusen Rückstreuung bei einer optischen Laufzeitmessung sein.

Manche Ausführungsbeispiele betreffen ein Verfahren gemäß Anspruch 11.

Das Verfahren kann teilweise von der hierin beschriebenen Einrichtung ausgeführt werden oder von einem Computer, Prozessor, elektronischen Schaltung oder dergleichen. Ausführungsbeispiele der Erfindung werden nun beispielhaft und unter Bezugnahme auf die beigefügte Zeichnung beschrieben, in der:
Fig. 1 ein Schema eines Ausführungsbeispiels einer Einrichtung veranschaulicht;
Fig. 2 von zwei Auswerteeinheiten empfangene zeitkorrelierte Histogrammdaten in zwei Histogrammen (links oben und links unten) zeigt und die in daraus in einer Histogramm-Akkumulationseinheit erzeugten Rückstreuungs-Histogrammdaten in einem Histogramm zeigt (rechts); und
Fig. 3 ein Ablaufdiagramm eines Ausführungsbeispiels eines Verfahrens veranschaulicht.

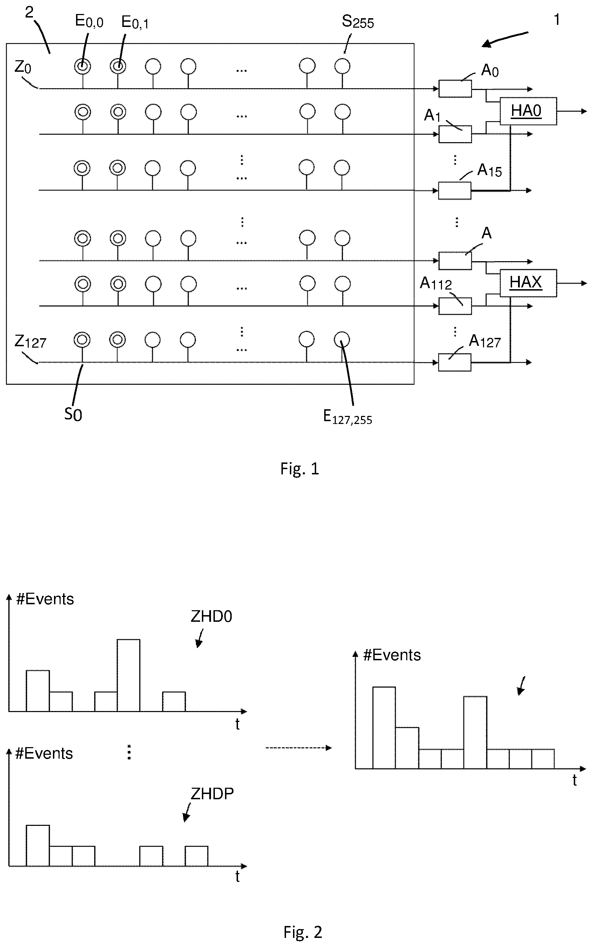

Fig. 1 veranschaulicht ein Schema eines Ausführungsbeispiels einer Einrichtung 1.

Die Einrichtung 1 weist eine Empfangsmatrix 2 auf, auf welcher mehrere lichtdetektierende Empfangselemente (ENxM, in diesem Ausführungsbeispiel E0,0 bis E127,255) in Zeilen (Z0 bis Z127) und Spalten (S0 bis S255) angeordnet sind. In jeder der N = 128 Zeilen (Z0 bis Z127) sind M = 256 lichtdetektierende Empfangselemente (E0,0 bis E127,255) angeordnet (korrespondierend zu den M = 256 Spalten (S0 bis S255)). Die lichtdetektierenden Empfangselemente (E0,0 bis E127,255) sind in diesem Ausführungsbeispiel SPADs.

Die Einrichtung 1 weist weiterhin mehrere Auswerteeinheiten (A0 bis A127) auf, wobei jeweils eine Auswerteeinheit (A0 bis A127) mit den lichtdetektierenden Empfangselementen (E0,0 bis E127,255) einer Zeile (Z0 bis Z127) über einen Multiplexer (nicht gezeigt) verbunden ist. In jeder Zeile (Z0 bis Z127) sind zu einem gegebenen Zeitpunkt nur die zwei lichtdetektierenden Empfangselemente (E0,0 und E0,1 bis E127,0 und E127,1) in den Spalten S0 und S1 aktiviert (illustriert durch den zweiten Kreis innerhalb der lichtdetektierenden Empfangselemente (E0,0 und E0,1 bis E127,0 und E127,1)). Die aktivierten lichtdetektierenden Empfangselemente (E0,0 und E0,1 bis E127,0 und E127,1) erzeugen bei Lichtdetektion elektrische Signale, aus denen mithilfe eines Zeit-Digital-Wandlers (nicht gezeigt) in jeder der Auswerteeinheiten (A0 bis A127) zeitkorrelierte Histogrammdaten erzeugt werden. In diesem Ausführungsbeispiel werden die zeitkorrelierten Histogrammdaten, der beiden aktivierten lichtdetektierenden Empfangselemente (E0,0 und E0,1 bis E127,0 und E127,1) in den Auswerteeinheiten (A0 bis A127) addiert, um zeitkorrelierte Histogrammdaten zu erzeugen und auszugeben. In anderen Ausführungsbeispielen kann auch eine beliebige Anzahl der M = 256 lichtdetektierenden Empfangselemente (E0,0 bis E127,255) in jeder Zeile aktiviert werden, z.B E0,0 bis E0,10, E1,0 bis E1,10, E2,0 bis E2,10,..., E127,0 bis E127,10.

Die Einrichtung 1 weist weiterhin mehrere Histogramm-Akkumulationseinheiten (HAO bis HAX) auf. Jede Histogramm-Akkumulationseinheit (HAO bis HAX) weist P = 16 Signaleingänge (nicht explizit gezeigt) auf, wobei jeder Signaleingang mit jeweils einer Auswerteeinheit (A0 bis A127) verbunden ist. Daher werden bei N = 128 Zeilen (Z0 bis Z127) in diesem Ausführungsbeispiel X = N/P = 8 Histogramm- Akkumulationseinheiten benötigt, die entsprechend die zeitkorrelierten Histogrammdaten von P = 16 Auswerteeinheiten (A0 bis A127) akkumulieren. Die von den Auswerteeinheiten (A0 bis A127) ausgegebenen zeitkorrelierten Histogrammdaten werden an die Histogramm-Akkumulationseinheiten (HA0 bis HA6X übertragen, sodass diese an den Signaleingängen empfangen werden. Die Histogramm- Akkumulationseinheiten (HAO bis HAX) erzeugen basierend auf den empfangenen zeitkorrelierten Histogrammdaten, Rückstreuungs-Histogrammdaten. In diesem Ausführungsbeispiel werden die an jedem Signaleingang empfangenen zeitkorrelierten Histogrammdaten addiert, um die Rückstreuungs-Histogrammdaten zu erzeugen.

Fig. 2 zeigt die von zwei Auswerteeinheiten (A0 und A1) empfangenen zeitkorrelierten Histogrammdaten (ZHDO bis ZHDP) beispielhaft für zwei von 16 Histogrammen (links oben und links unten) und zeigt die daraus in einer Histogramm- Akkumulationseinheit (HAO) erzeugten Rückstreuungs-Histogrammdaten (RHDO) in einem Histogramm (rechts).

Die Einrichtung 1 in diesem Ausführungsbeispiel ist analog zu der Einrichtung 1 aus Fig. 1 konfiguriert.

In Fig. 2 ist veranschaulicht, wie die zeitkorrelierten Histogrammdaten (ZHDO bis ZHDP), die von 16 Auswerteeinheiten (A0 bis A15) erzeugt wurden, akkumuliert werden.

Die horizontale Achse ist die Zeitachse, welche in mehrere gleiche Zeitintervalle ("Bins") aufgeteilt ist und je nach Zeitpunkt der Lichtdetektion ("Event") wird das Event einem der Zeitintervalle zugeordnet. Die Anzahl der innerhalb des Zeitintervalls detektierten Events ist durch die Höhe eines Balkens auf der vertikalen Achse veranschaulicht. Die Anzahl der Events in jedem Zeitintervall der zeitkorrelierten Histogrammdaten (ZHDO bis ZHDP) wird addiert, um die Rückstreuungs- Histogrammdaten (RHDO) zu erzeugen.

Der große Balken im fünften Zeitintervall der zeitkorrelierten Histogrammdaten (ZHDO) aus der ersten Auswerteeinheit (A0) entspricht hier einem kleinen Objekt, welches nur in einem geringen Bereich des Sichtfeldes registriert wird. Der Beitrag der diffusen Rückstreuung ist aber im gesamten Sichtfeld vor dem Objekt bei geringen Distanzen vorhanden, daher auch in den beiden beispielhaften zeitkorrelierten Histogrammdaten (ZHDO bis ZHDP) vorhanden. Die Addition der 16 zeitkorrelierten Histogrammdaten (ZHDO bis ZHDP) erhöht das SNR in den Rückstreuungs-Histogrammdaten (RHDO) im Vergleich zum Beitrag durch Objekte und Umgebungslicht. Dadurch eignen sich die Rückstreuungs-Histogrammdaten (RHDO) besser für die Bestimmung einer diffusen Rückstreuung bei einer optischen Laufzeitmessung.

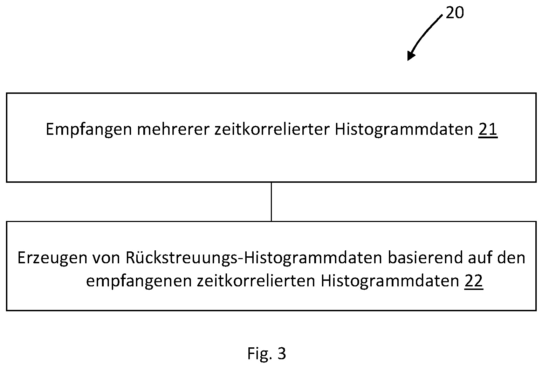

Fig. 3 veranschaulicht ein Ablaufdiagramm eines Ausführungsbeispiels eines Verfahrens 20.

Bei 21 werden mehrere zeitkorrelierter Histogrammdaten empfangen, wie hierin ausgeführt.

Bei 22 werden basierend auf den empfangenen zeitkorrelierten Histogrammdaten, Rückstreuungs-Histogrammdaten erzeugt, wie hierin ausgeführt.

### Bezugszeichen

- 1: Einrichtung
- 2: Empfangsmatrix
- 20: Verfahren
- 21: Empfangen mehrerer zeitkorrelierter Histogrammdaten
- 22: Erzeugen von Rückstreuungs-Histogrammdaten basierend auf den empfangenen zeitkorrelierten Histogrammdaten

- A0 bis A127: Auswerteeinheiten
- ENxM, E0,0 bis E127,255: lichtdetektierende Empfangselemente HA0 bis HAX Histogramm-Akkumulationseinheiten
- RHD0: Rückstreuungs-Histogrammdaten
- S0 bis S255: Spalten
- Z0 bis Z127: Zeilen
- ZHD0 bis ZHDP: zeitkorrelierte Histogrammdaten

## Patentansprüche

1. Einrichtung (1) zur Erzeugung von Rückstreuungs-Histogrammdaten (RHDO) für die Bestimmung einer diffusen Rückstreuung bei einer optischen Laufzeitmessung,
wobei die Einrichtung (1)
eine Empfangsmatrix mit mehreren lichtdetektierenden Empfangselementen umfasst,
wobei die optische Laufzeitmessung auf TCSPC, time correlated single photon counting, beruht, sodass periodisch Lichtpulse ausgesandt werden und die Messzeit bis zum Empfang durch einer der lichtdetektierenden Empfangselemente gemessen wird, wobei die Messzeit in Zeitintervalle geteilt ist,
wobei jedes der lichtdetektierenden Empfangselemente dazu eingerichtet ist, Licht zu detektieren und in Reaktion darauf ein elektrisches Signal zu erzeugen, wobei mithilfe eines Zeit-Digital-Wandlers das elektrische Signal einem der Zeitintervalle zugeordnet wird,
wobei durch das Zählen der elektrischen Signale, die einem Zeitintervall zugeordnet werden, zeitkorrelierte Histogrammdaten erzeugt werden,
wobei die zeitkorrelierten Histogrammdaten Signalbeiträge aus diffuser Rückstreuung umfassen,
wobei die Einrichtung wenigstens eine Histogramm-Akkumulationseinheit (HAO bis HAX) umfasst, die mehrere Signaleingänge aufweist, um die zeitkorrelierten Histogrammdaten (ZHDO bis ZHDP) zu empfangen,
wobei die Histogramm-Akkumulationseinheit (HAO bis HAX) dazu eingerichtet ist, basierend auf den an den Signaleingängen empfangenen zeitkorrelierten Histogrammdaten (ZHDO bis ZHDP), Rückstreuungs-Histogrammdaten (RHDO) zu erzeugen,
wobei die Histogramm-Akkumulationseinheit (HAO bis HAX) die Rückstreuungs-Histogrammdaten (RHDO) durch Addition der empfangenen zeitkorrelierten Histogrammdaten (ZHDO bis ZHDP) erzeugt werden,
**dadurch gekennzeichnet, dass** die Histogramm- Akkumulationseinheit (HAO bis HAX) weiter dazu eingerichtet ist, empfangene zeitkorrelierte Histogrammdaten (ZHDO bis ZHDP) von Zeitintervallen, die über einem bestimmten Zeitschwellenwert liegen, für die Erzeugung der Rückstreuungs-Histogrammdaten (RHDO) nicht zu berücksichtigen. .

2. Einrichtung (1) nach Anspruch 1, wobei die Histogramm- Akkumulationseinheit (HAO bis HAX) aus den empfangenen zeitkorrelierten Histogrammdaten (ZHDO bis ZHDP) ein arithmetisches Mittel berechnet, um die Rückstreuungs-Histogrammdaten (RHDO) zu erzeugen.

3. Einrichtung (1) nach einem der vorherigen Ansprüche, wobei die Histogramm-Akkumulationseinheit (HAO bis HAX) die empfangenen zeitkorrelierten Histogrammdaten (ZHDO bis ZHDP) von mehreren Zeitintervallen in einem Zeitintervall akkumuliert, um die Rückstreuungs-Histogrammdaten (RHDO) zu erzeugen.

4. Einrichtung (1) nach einem der vorherigen Ansprüche, wobei die Histogramm-Akkumulationseinheit (HAO bis HAX) weiter dazu eingerichtet ist, die empfangenen zeitkorrelierten Histogrammdaten (ZHDO bis ZHDP) für die Erzeugung der Rückstreuungs-Histogrammdaten (RHDO) zu gewichten.

5. Einrichtung (1) nach einem der vorherigen Ansprüche, wobei die Histogramm-Akkumulationseinheit (HAO bis HAX) weiter dazu eingerichtet ist, die Rückstreuungs- Histogrammdaten (RHDO) für die Bestimmung der Rückstreuung auszugeben.

6. Einrichtung (1) nach Anspruch 1, wobei jedes der lichtdetektierenden Empfangselemente (ENxM, E0,0 bis E127,255) aktivierbar und deaktivierbarist.

7. Einrichtung (1) nach Anspruch 1 oder 6, wobei die lichtdetektierenden Empfangselemente (ENxM, E0,0 bis E127,255) in der Empfangsmatrix (2) in Spalten (S0 bis S255) und in Zeilen (Z0 bis Z127) angeordnet sind, wobei in jeder Zeile (Z0 bis Z127) gleich viele lichtdetektierende Empfangselemente (ENxM, E0,0 bis E127,255) vorgesehen sind.

8. Einrichtung (1) nach Anspruch 7, weiter umfassend:
mehrere Auswerteeinheiten (A0 bis A127) zur Ausgabe der zeitkorrelierten Histogrammdaten (ZHDO bis ZHDP), wobei jeweils eine Auswerteeinheit (A0 bis A127) mit den lichtdetektierenden Empfangselementen (ENxM, E0,0 bis E127,255) in einer Spalte (S0 bis S255) oder jeweils eine Auswerteeinheit (A0 bis A127) mit den lichtdetektierenden Empfangselementen (ENxM, E0,0 bis E127,255) in einer Zeile (Z0 bis Z127) verbunden ist,
wobei jede der Auswerteeinheiten (A0 bis A127) dazu eingerichtet ist, die zeitkorrelierten Histogrammdaten (ZHDO bis ZHDP) basierend auf den elektrischen Signalen der lichtdetektierenden Empfangselemente (ENxM, E0,0 bis E127,255) zu erzeugen.

9. Einrichtung (1) nach Anspruch 8 soweit dieser von Anspruch 6 abhängt, wobei für die Erzeugung der zeitkorrelierten Histogrammdaten (ZHDO bis ZHDP) nur die lichtdetektierenden Empfangselemente (ENxM, E0,0 bis E127,255) berücksichtigt werden, welche aktiviert sind.

10. Einrichtung (1) nach einem der vorherigen Ansprüche, wobei jeder Signaleingang mit einer Auswerteeinheit (A0 bis A127) verbunden ist, sodass die zeitkorrelierten Histogrammdaten (ZHDO bis ZHDP) von der Auswerteeinheit (A0 bis A127) an die entsprechende Histogramm-Akkumulationseinheit (HAO bis HAX) übertragen werden.

11. Verfahren (20) zur Erzeugung von Rückstreuungs-Histogrammdaten für die Bestimmung einer diffusen Rückstreuung bei einer optischen Laufzeitmessung, wobei die Lichtlaufzeitmessung auf TCSPC, time correlated single photon counting, beruht, sodass periodisch Lichtpulse ausgesandt werden und die Messzeit bis zum Empfang durch ein lichtdetektierendes Empfangselement gemessen wird, wobei die Messzeit in Zeitintervalle geteilt ist,
wobei das Verfahren umfasst:
Detektieren von Licht und Erzeugung eines elektrischen Signals mittels lichtdetektierender Empfangselemente einer Empfangsmatrix, Zuordnen des elektrischen Signals zu einem der Zeitintervalle mithilfe eines Zeit-Digital-Wandlers,
Zählen der elektrischen Signale, die einem Zeitintervall zugeordnet werden und somit Erzeugen von zeitkorrelierten Histogrammdaten,
wobei die zeitkorrelierten Histogrammdaten Signalbeiträge aus diffuser Rückstreuung umfassen,
Empfangen (21) der zeitkorrelierten Histogrammdaten, und Erzeugen (22) von Rückstreuungs-Histogrammdaten basierend auf den empfangenen zeitkorrelierten Histogrammdaten,
wobei die Rückstreuungs-Histogrammdaten (RHDO) durch Addition der empfangenen zeitkorrelierten Histogrammdaten (ZHDO bis ZHDP) erzeugt werden,
**dadurch gekennzeichnet, dass** empfangene zeitkorrelierte Histogrammdaten (ZHDO bis ZHDP) von Zeitintervallen, die über einem bestimmten Zeitschwellenwert liegen, für die Erzeugung der Rückstreuungs- Histogrammdaten (RHDO) nicht berücksichtigt werden.

## Claims

1. Device (1) for generating backscatter histogram data (RHDO) for determining diffuse backscatter in an optical transit time measurement,
wherein the device (1)
comprises a receiving matrix with several light-detecting receiving elements,
wherein the optical transit time measurement is based on TCSPC, time correlated single photon counting, so that light pulses are emitted periodically and the measurement time until reception is measured by one of the light-detecting receiving elements, wherein the measurement time is divided into time intervals,
wherein each of the light-detecting receiving elements is configured for detecting light and for generating an electrical signal in response thereto,
wherein the electrical signal is assigned to one of the time intervals using a time-to-digital converter,
wherein time-correlated histogram data is generated by counting the electrical signals that are assigned to a time interval,
wherein the time-correlated histogram data comprises signal contributions from diffuse backscatter,
wherein the device comprises at least one histogram accumulation unit (HAO to HAX) which has a plurality of signal inputs for receiving the time-correlated histogram data (ZHDO to ZHDP),
wherein the
histogram accumulation unit (HAO to HAX) is configured to generate backscatter histogram data (RHDO) based on the time-correlated histogram data (ZHDO to ZHDP) received at the signal inputs,
wherein the histogram accumulation unit (HAO to HAX) the backscatter histogram data (RHDO) are generated by adding the received time-correlated histogram data (ZHDO to ZHDP),
**characterized in that**
the histogram accumulation unit (HAO to HAX) is further configured not to take into account received time-correlated histogram data (ZHDO to ZHDP) of time intervals which are above a certain time threshold for the generation of the backscatter histogram data (RHDO). .

2. Device (1) according to claim 1, wherein the histogram accumulation unit (HAO to HAX) calculates an arithmetic mean from the received time-correlated histogram data (ZHDO to ZHDP) to generate the backscatter histogram data (RHDO).

3. Device (1) according to one of the preceding claims, wherein the histogram accumulation unit (HAO to HAX) accumulates the received time-correlated histogram data (ZHDO to ZHDP) of several time intervals in one time interval to generate the backscatter histogram data (RHDO).

4. Device (1) according to one of the preceding claims, wherein the histogram accumulation unit (HAO to HAX) is further configured to weight the received time-correlated histogram data (ZHDO to ZHDP) for generating the backscatter histogram data (RHDO).

5. Device (1) according to one of the preceding claims, wherein the histogram accumulation unit (HAO to HAX) is further configured to output the backscatter histogram data (RHDO) for determining the backscatter.

6. Device (1) according to claim 1, wherein each of the light-detecting receiving elements (ENxM, E0,0 to E127,255) can be activated and deactivated.

7. Device (1) according to claim 1 or 6, wherein the light-detecting receiving elements (ENxM, E0,0 to E127,255) are arranged in the receiving matrix (2) in columns (S0 to S255) and in rows (Z0 to Z127), wherein an equal number of light-detecting receiving elements (ENxM, E0,0 to E127,255) is provided in each row (Z0 to Z127).

8. Device (1) according to claim 7, further comprising:
several evaluation units (A0 to A127) for outputting the time-correlated histogram data (ZHDO to ZHDP), wherein one evaluation unit each (A0 to A127) is connected with the light-detecting receiving elements (ENxM, E0,0 to E127,255) in a column (S0 to S255) or one evaluation unit each (A0 to A127) is connected with the light-detecting receiving elements (ENxM, E0,0 to E127,255) in a row (Z0 to Z127),
wherein each of the evaluation units (A0 to A127) is configured for generating the time-correlated histogram data (ZHDO to ZHDP) based on the electrical signals of the light-detecting receiving elements (ENxM, E0,0 to E127,255).

9. Device (1) according to claim 8 insofar as it depends on claim 6, wherein only the light-detecting receiving elements (ENxM, E0,0 to E127,255) which are activated are taken into account for the generation of the time-correlated histogram data (ZHDO to ZHDP).

10. Device (1) according to one of the preceding claims, wherein each signal input is connected with an evaluation unit (A0 to A127), so that the time-correlated histogram data (ZHDO to ZHDP) are transmitted from the evaluation unit (A0 to A127) to the corresponding histogram accumulation unit (HAO to HAX).

11. Method (20) for generating backscatter histogram data for determining diffuse backscatter in an optical runtime measurement, wherein the light runtime measurement is based on TCSPC, time correlated single photon counting, so that light pulses are emitted periodically and the measurement time until reception by a light-detecting receiving element is measured, wherein the measurement time is divided into time intervals,
wherein the method comprises:
Detecting light and generating an electrical signal by means of light-detecting receiving elements of a receiving matrix,
Assigning the electrical signal to one of the time intervals using a time-to-digital converter,
Counting the electrical signals that are assigned to a time interval and thus generating time-correlated histogram data,
wherein the time-correlated histogram data comprise signal contributions from diffuse back-scattering,
receiving (21) the time-correlated histogram data, and generating (22) backscatter histogram data based on the received time-correlated histogram data,
wherein the backscatter histogram data (RHDO) is generated by adding the received time-correlated histogram data (ZHDO to ZHDP),
**characterized in that**
received time-correlated histogram data (ZHDO to ZHDP) of time intervals that are above a certain time threshold are not taken into account for the generation of the backscatter histogram data (RHDO).

## Revendications

1. Dispositif (1) pour la génération de données d'histogramme de rétrodiffusion (RHDO) pour la détermination d'une rétrodiffusion diffuse lors d'une mesure optique du temps de propagation,
dans lequel le dispositif (1) comprend une matrice de réception avec plusieurs éléments de réception détectant de la lumière,
la mesure optique du temps de propagation étant basée sur le TCSPC, time correlated single photon counting, de sorte que des impulsions lumineuses sont émises périodiquement et que le temps de mesure jusqu'à la réception par l'un des éléments de réception détectant de la lumière est mesuré, le temps de mesure étant divisé en intervalles de temps,
dans lequel chacun desdits éléments de réception de détection de lumière est adapté pour détecter de la lumière et pour générer un signal électrique en réponse à celle-ci,
dans lequel, à l'aide d'un convertisseur temps/numérique, le signal électrique est associé à l'un des intervalles de temps,
dans lequel des données d'histogramme corrélées dans le temps sont générées par le comptage des signaux électriques associés à un intervalle de temps,
les données d'histogramme corrélées dans le temps comprenant des contributions de signal provenant d'une rétrodiffusion diffuse,
dans lequel le dispositif comprend au moins une unité d'accumulation d'histogramme (HAO à HAX) ayant une pluralité d'entrées de signal pour recevoir les données d'histogramme corrélées dans le temps (ZHDO à ZHDP),
dans lequel l'unité d'accumulation d'histogrammes (HAO à HAX) est adaptée pour générer des données d'histogramme rétrodiffusées (RHDO) sur la base des données d'histogramme corrélées dans le temps (ZHDO à ZHDP) reçues au niveau des entrées de signal,
dans lequel l'unité d'accumulation d'histogrammes (HAO à HAX) génère les données d'histogramme rétrodiffusées (RHDO) en additionnant les données d'histogramme corrélées dans le temps reçues (ZHDO à ZHDP),
**caractérisé en ce que**
l'unité d'accumulation d'histogrammes (HAO à HAX) est en outre agencée pour ne pas prendre en compte des données d'histogramme corrélées dans le temps reçues (ZHDO à ZHDP) d'intervalles de temps qui sont supérieurs à une valeur de seuil de temps déterminée pour la génération des données d'histogramme rétrodiffusées (RHD0).

2. Dispositif (1) selon la revendication 1, dans lequel l'unité d'accumulation d'histogrammes (HAO à HAX) calcule une moyenne arithmétique à partir des données d'histogramme corrélées dans le temps reçues (ZHDO à ZHDP) pour générer les données d'histogramme rétrodiffusées (RHDO).

3. Dispositif (1) selon l'une quelconque des revendications précédentes, dans lequel l'unité d'accumulation d'histogrammes (HAO à HAX) accumule les données d'histogramme corrélées dans le temps reçues (ZHDO à ZHDP) de plusieurs intervalles de temps dans un intervalle de temps pour produire les données d'histogramme rétrodiffusées (RHD0).

4. Dispositif (1) selon l'une quelconque des revendications précédentes, dans lequel l'unité d'accumulation d'histogrammes (HAO à HAX) est en outre agencée pour pondérer les données d'histogramme corrélées dans le temps reçues (ZHDO à ZHDP) pour la génération des données d'histogramme rétrodiffusées (RHD0).

5. Dispositif (1) selon l'une quelconque des revendications précédentes, dans lequel l'unité d'accumulation d'histogrammes (HAO à HAX) est en outre adaptée pour fournir en sortie les données d'histogramme de rétrodiffusion (RHDO) pour la détermination de la rétrodiffusion.

6. Dispositif (1) selon la revendication 1, dans lequel chacun des éléments de réception détectant de la lumière (ENxM, E0,0 à E127,255) peut être activé et désactivé.

7. Dispositif (1) selon la revendication 1 ou 6, dans lequel les éléments de réception (ENxM, E0,0 à E127,255) détectant de la lumière sont disposés dans la matrice de réception (2) en colonnes (S0 à S255) et en lignes (Z0 à Z127), le même nombre d'éléments de réception (ENxM, E0,0 à E127,255) détectant de la lumière étant prévu dans chaque ligne (Z0 à Z127).

8. Dispositif (1) selon la revendication 7, comprenant en outre :
plusieurs unités d'évaluation (A0 à A127) pour la sortie des données d'histogramme corrélées dans le temps (ZHDO à ZHDP), une unité d'évaluation (A0 à A127) étant respectivement équipée des éléments de réception détectant de la lumière (ENxM, E0,0 à E127,255) dans une colonne (S0 à S255) ou respectivement une unité d'évaluation (A0 à A127) est reliée aux éléments de réception détectant de la lumière (ENxM, E0,0 à E127,255) dans une ligne (Z0 à Z127), dans lequel chacune des unités d'évaluation (A0 à A127) est adaptée pour générer les données d'histogramme corrélées dans le temps (ZHDO à ZHDP) sur la base des signaux électriques des éléments de réception de détection de lumière (ENxM, E0,0 à E127,255).

9. Dispositif (1) selon la revendication 8 dans la mesure où celui-ci dépend de la revendication 6, dans lequel, pour la génération des données d'histogramme corrélées dans le temps (ZHDO à ZHDP), seuls les éléments de réception détectant de la lumière (ENxM, E0,0 à E127,255) qui sont activés sont pris en compte.

10. Dispositif (1) selon l'une des revendications précédentes, dans lequel chaque entrée de signal est reliée à une unité d'évaluation (A0 à A127), de sorte que les données d'histogramme corrélées dans le temps (ZHDO à ZHDP) sont transmises de l'unité d'évaluation (A0 à A127) à l'unité d'accumulation d'histogrammes correspondante (HAO à HAX).

11. Procédé (20) de génération de données d'histogramme de rétrodiffusion pour la détermination d'une rétrodiffusion diffuse dans une mesure optique du temps de propagation, la mesure du temps de propagation de la lumière étant basée sur le TCSPC, time correlated single photon counting, de sorte que des impulsions de lumière sont émises périodiquement et que le temps de mesure jusqu'à la réception est mesuré par un élément de réception détectant de la lumière, le temps de mesure étant divisé en intervalles de temps,
le procédé comprenant :
détection de la lumière et génération d'un signal électrique au moyen d'éléments récepteurs de détection de la lumière d'une matrice de réception,
associer le signal électrique à l'un des intervalles de temps à l'aide d'un convertisseur temps/numérique,
compter les signaux électriques associés à un intervalle de temps et générer ainsi des données d'histogramme corrélées dans le temps,
les données d'histogramme corrélées dans le temps comprenant des contributions de signal provenant d'une rétrodiffusion diffuse,
réception (21) des données d'histogramme corrélées dans le temps, et génération (22) de données d'histogramme rétrodiffusées sur la base des données d'histogramme corrélées dans le temps reçues,
dans lequel les données d'histogramme rétrodiffusées (RHDO) sont générées en additionnant les données d'histogramme corrélées dans le temps reçues (ZHDO à ZHDP),
**caractérisé en ce que**
des données d'histogramme corrélées dans le temps (ZHDO à ZHDP) reçues d'intervalles de temps supérieurs à un certain seuil de temps ne sont pas prises en compte pour la génération des données d'histogramme rétrodiffusé (RHDO).
